# EUROPEAN PATENT APPLICATION

(11) **EP 4 610 762 A1**
(43) Date of publication of application: **03.09.2025**
(21) Application number: 25160556.4
(22) Date of filing: 27.02.2025
(51) Int. Cl.: G05D 1/225, G05D 1/243

(54) **UNMANNED DELIVERY SYSTEM IN MARINE VESSEL AND CONTROL METHOD THEREFOR, AND MARINE VESSEL**

(30) Priority: 01.03.2024 JP 2024031009
(71) Applicant: Yamaha Hatsudoki Kabushiki Kaisha, Iwata-shi, Shizuoka 438-8501 (JP)
(72) Inventor: Inoue, Hiroshi, Iwata-shi, Shizuoka, 4388501 (JP); Okamura, Daisuke, Iwata-shi, Shizuoka, 4388501 (JP); Naito, Katsutoshi, Iwata-shi, Shizuoka, 4388501 (JP); Akahane, Kunihiko, Iwata-shi, Shizuoka, 4388501 (JP); Takase, Hiroaki, Iwata-shi, Shizuoka, 4388501 (JP); Yoshida, Kazumichi, Iwata-shi, Shizuoka, 4388501 (JP); Hirota, Tomohiro, Iwata-shi, Shizuoka, 4388501 (JP)
(74) Representative: Grünecker Patent- und Rechtsanwälte PartG mbB

(57) **Abstract**

An unmanned delivery system in a marine vessel includes an acquisition unit that acquires destination information of a cargo to be delivered, an automatic navigation unit that causes a marine vessel to automatically navigate in an unmanned manner to a destination port indicated by the destination information, and a controller that performs arrival notification and fixed point holding of the marine vessel when the marine vessel arrives at the destination port.

## Description

The present invention relates to an unmanned delivery system in a marine vessel and a control method therefor, and a marine vessel.

In the field of automobiles, techniques for delivering a baggage by automatic driving have been developed (e.g., Japanese Patent No. JP 7211164 B). On the other hand, also in the field of marine vessels, if smooth automatic navigation becomes possible in the future, automatic delivery by unmanned navigation is expected to be realized with high accuracy.

However, since a marine vessel has unique circumstances different from those on land, it is required to develop an automatic delivery technique in consideration of these circumstances.

An object of the present invention is to provide an unmanned delivery system in a marine vessel which enables unmanned delivery of a cargo via the sea.

According to an example embodiment of the present invention, an unmanned delivery system in a marine vessel includes an acquisition unit that acquires destination information of a cargo to be delivered, an automatic navigation unit that causes a marine vessel to automatically navigate in an unmanned manner to a destination port indicated by the destination information, and a controller that performs arrival notification and fixed point holding of the marine vessel when the marine vessel arrives at the destination port.

According to this configuration, destination information of a cargo to be delivered is acquired, a marine vessel is automatically navigated in an unmanned manner to a destination port indicated by the destination information, and arrival notification and fixed point holding of the marine vessel are performed when the marine vessel arrives at the destination port.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 is a schematic side view of a marine vessel to which an unmanned delivery system is applied.
FIG. 2 is a block diagram of a main part of the unmanned delivery system.
FIG. 3 is a conceptual diagram of unmanned delivery.
FIG. 4 is a diagram illustrating an example of a flow of delivery control processing in the unmanned delivery system.
FIG. 5 is a flowchart of the delivery control processing.

### DETAILED DESCRIPTION OF THE EXAMPLE EMBODIMENTS

Hereinafter, example embodiments of the present invention will be described with reference to the drawings.

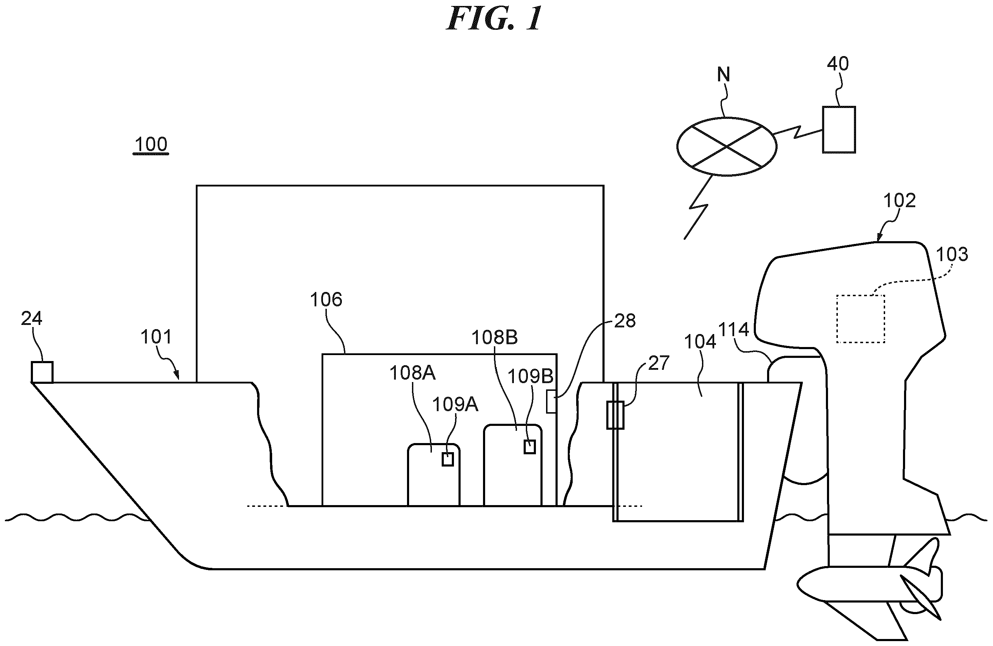

FIG. 1 is a schematic side view of a marine vessel to which an unmanned delivery system according to an example embodiment of the present invention is applied. A marine vessel 100 includes a hull 101 and a marine propulsion device 102 mounted on the hull 101. The marine propulsion device 102 is, for example, an outboard motor. Two or more marine propulsion devices 102 may be provided. The marine vessel 100 is communicably connected to a server 40 via a network N.

The marine propulsion device 102 is attached to the hull 101 via an attachment unit 114. The marine propulsion device 102 includes a drive source (e.g., an engine) 103. The drive source 103 may be an electric motor. The marine propulsion device 102 obtains a thrust for moving the hull 101 by a propeller rotated by a driving force of the drive source 103. The attachment unit 114 includes a swivel bracket, a clamp bracket, a steering shaft, and a tilt shaft (none of which are shown).

The attachment unit 114 further includes a power trim and tilt mechanism (PTT mechanism) (not shown). The PTT mechanism rotates the marine propulsion device 102 about the tilt shaft. This enables change of an inclination angle (trim angle, tilt angle) of the marine propulsion device 102 with respect to the hull 101. In addition, the marine propulsion device 102 is rotatable about the steering shaft with respect to the swivel bracket. In manual navigation, the marine propulsion device 102 turns left and right by operation of a steering wheel (not illustrated), whereby the marine vessel 100 is steered.

A camera 24 is installed at a bow. The camera 24 may be attached, for example, directly to a bow rail (not shown) or via a support. An imaging direction of the camera 24 is set substantially forward. The camera 24 may be a stereo camera.

The marine vessel 100 is used to deliver a cargo. The marine vessel 100 includes a cargo room 106. A loading lock 28 is provided on a door (not illustrated) of the cargo room 106, and when the loading lock 28 is unlocked, the door is opened to allow the cargo to be loaded (carried in) and taken out (carried out). A marine vessel door lock 27 is provided on a door 104 of the marine vessel 100. An arrangement position of the door 104 is not limited. When the marine vessel door lock 27 is released, an operator can get on and off the marine vessel. Therefore, in order to load and take out the cargo, it is necessary to release the locks 27 and 28. Note that it is not essential to provide the cargo room 106 and the loading lock 28, and an entire floor surface of the hull 101 may be used as a cargo loading area.

As illustrated in FIG. 1, a tag 109 (109A, 109B) is attached to a cargo 108 (108A, 108B) loaded in a cargo room 106 for delivery. The tag 109 records cargo specifying information. The cargo specifying information is correspondence information that associates the cargo 108 with its destination information. The cargo 108 and the destination are uniquely specified by the cargo specifying information. The information for specifying the cargo 108 and the destination is not limited to physical elements such as the tag 109.

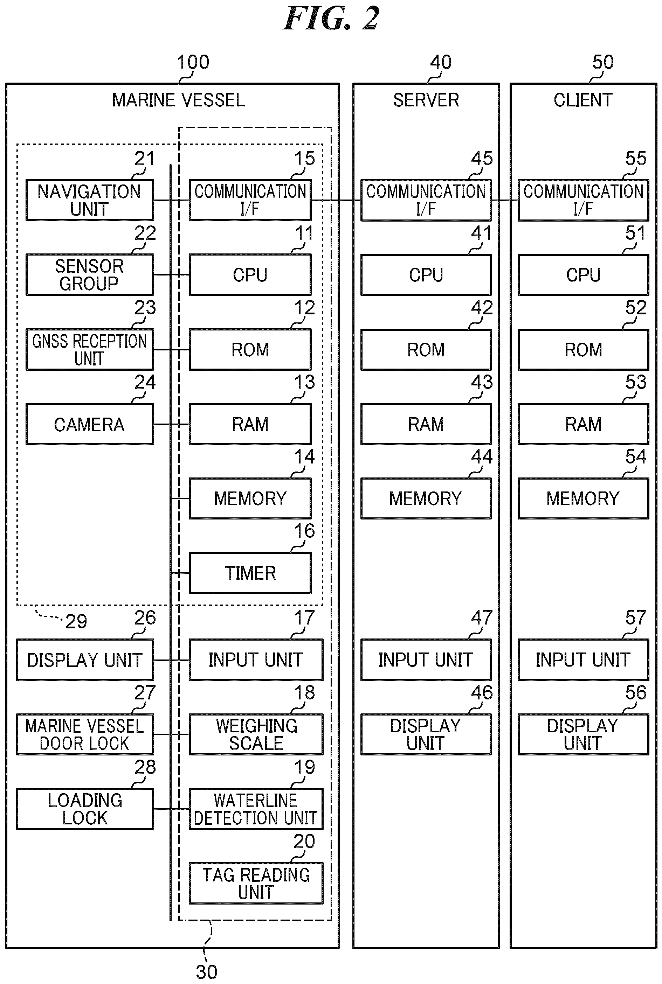

FIG. 2 is a block diagram of a main part of the unmanned delivery system. The unmanned delivery system is configured by the marine vessel 100, the server 40, and one or more clients 50.

In addition to the camera 24, the marine vessel door lock 27, and the loading lock 28 described above, the marine vessel 100 has a navigation unit 21, a sensor group 22, a GNSS reception unit 23, and a display unit 26. In addition, the marine vessel 100 has a CPU 11, a ROM 12, a RAM 13, a memory 14, a communication I/F (interface) 15, a timer 16, an input unit 17, a weighing scale 18, a waterline detection unit 19, and a tag reading unit 20.

The CPU 11 controls the entire marine vessel 100. The ROM 12 or the memory 14 stores a control program. The memory 14 also stores chart information acquired from the server 40. The CPU 11 implements various control processing by developing the control program stored in the ROM 12 or the like to the RAM 13 and executing the control program. The RAM 13 provides a work area when the CPU 11 executes the control program. The timer 16 counts time.

In addition to the drive source 103 (FIG. 1), the navigation unit 21 includes elements necessary for navigation such as a steering, a remote controller, a throttle, a shift mechanism, a steering mechanism, and the like (none of which are illustrated). In addition to a sensor that detects operation of the input unit 17, the sensor group 22 may include an azimuth sensor, an acceleration sensor, a speed sensor, an angular velocity sensor, an engine speed sensor, a shift position sensor, a millimeter wave radar, and the like (none of which are illustrated). A detection result obtained by the sensor group 22 is sent to the CPU 11.

The GNSS reception unit 23 periodically receives a global navigation satellite systems (GNSS) signal from a GNSS satellite. As a result, the CPU 11 can acquire a current position of the marine vessel 100.

The input unit 17 receives inputs of various settings, modes, and the like from a vessel operator of the marine vessel 100. The communication I/F 15 can communicate with the server 40 via the network N, and also can communicate with an Electronic Control Unit (ECU) (not illustrated) that controls the drive source 103 of the navigation unit 21 by Controller Area Network (CAN) or the like.

The camera 24 is a photographing unit that is fixed to the hull 101 and photographs a subject. The display unit 26 displays various types of information. The captured image obtained by the camera 24 is sent to the CPU 11 and displayed on the display unit 26 in a manner according to a set mode.

The marine vessel door lock 27 and the loading lock 28 are changeable between a locked state and an unlocked state in accordance with an instruction from the CPU 11. For example, the weighing scale 18 is arranged on a floor surface of the cargo room 106, measures a total weight of a cargo loaded in the cargo room 106, and sends a measurement value to the CPU 11. The waterline detection unit 19 detects a waterline. Although as the waterline detection unit 19, for example, a detector such as an imaging device or an ultrasonic sensor can be employed, a configuration thereof is not limited. The tag reading unit 20 reads information held by the tag 109 attached to the cargo.

In FIG. 2, an automatic navigation unit 29 is configured by elements indicated by the reference numerals 11 to 16 and 21 to 24. In addition, an acquisition unit 30 is configured by the elements indicated by the reference numerals 11 to 20. Note that it is not essential for each of the acquisition unit 30 and the automatic navigation unit 29 to include all the elements illustrated in FIG. 2.

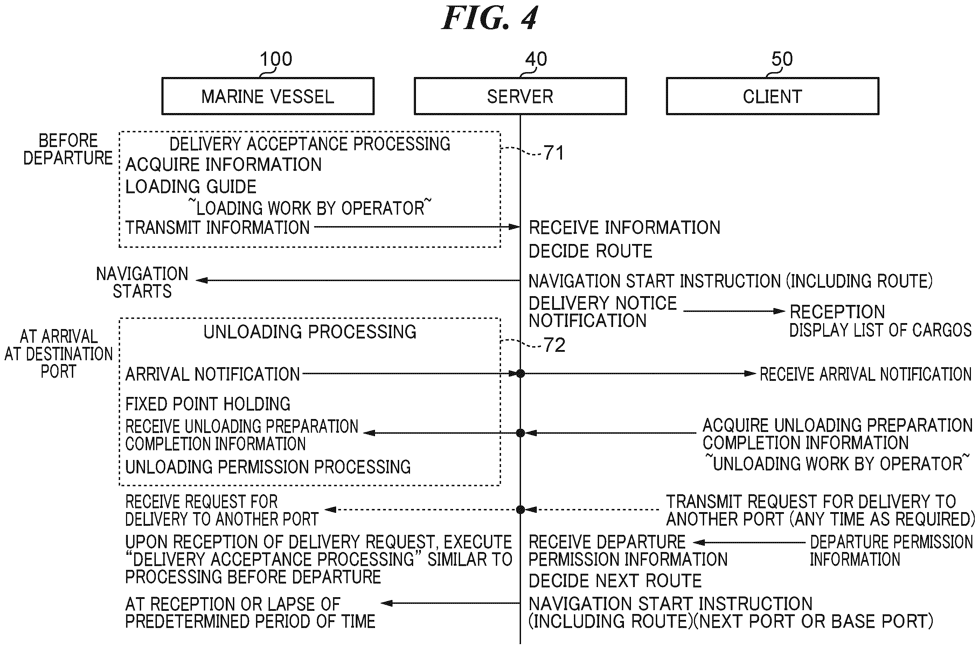

Although details will be described later, the acquisition unit 30 acquires destination information, cargo specifying information, and the like of a cargo to be delivered (loaded on the marine vessel 100) in delivery acceptance processing 71 (FIG. 4).

The automatic navigation unit 29 automatically navigates the marine vessel 100 in an unmanned manner to a destination port indicated by the destination information. In consideration of an emergency or the like, a crew member may board the marine vessel 100 during delivery by automatic navigation. As a basic method for realizing unmanned automatic navigation by the automatic navigation unit 29, a known method can be adopted. The automatic navigation unit 29 realizes automatic navigation mainly by using the captured images obtained by the camera 24, detection information obtained from the sensor group 22, position information obtained from the GNSS reception unit 23, and the like.

The server 40 has a CPU 41, a ROM 42, a RAM 43, a memory 44, a communication I/F 45, an input unit 47, and a display unit 46. The CPU 41 implements various control processing by developing control program stored in the ROM 42 or in the memory 44 to the RAM 43 and executing the control program. The RAM 43 provides a work area when the CPU 41 executes the control program. The display unit 46 displays various types of information. The input unit 47 receives inputs of various settings and instructions from a user of the server 40. The communication I/F 45 can communicate with the marine vessel 100 and the client 50 via the network N.

The client 50 has a CPU 51, a ROM 52, a RAM 53, a memory 54, a communication I/F 55, an input unit 57, and a display unit 56. The CPU 51 implements various control processing by developing a control program stored in the ROM 52 or the memory 54 to the RAM 53 and executing the control program. The RAM 53 provides a work area when the CPU 51 executes the control program. The display unit 56 displays various types of information. The input unit 57 receives inputs of various settings and instructions from a user of the client 50. The communication I/F 55 can communicate with the network N.

Note that the communication I/F 15, 45, and 55 may include a plurality of communication functions, and a method of the communication functions may be wired or wireless. In addition, any communication I/F may include a short-distance wireless communication function.

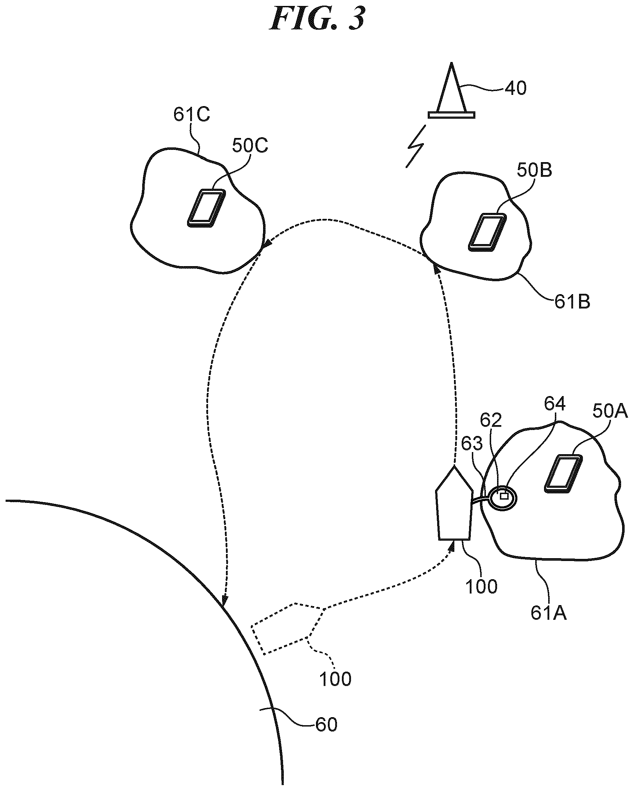

FIG. 3 is a conceptual diagram of unmanned delivery. The unmanned delivery is mainly realized by the marine vessel 100 carrying a cargo from a base port 60 on land to an island 61 (61A, 61B, 61C) separated by the sea, and a recipient or the like unloading the cargo at a port (pier) of the island 61. Although three islands 61 are illustrated in FIG. 3, the number of the islands 61 may be one or four or more.

The client 50 (50A, 50B, 50C) is a communication terminal device such as a smartphone owned by a user who receives a cargo on the island 61 (61A, 61B, 61C). Communication terminal devices of users in the islands 61A, 61B, and 61C are assumed as the clients 50A, 50B, and 50C, respectively. Note that one or more clients 50 may correspond to one island 61.

It is assumed that a predetermined application is installed in each client 50 in advance. As represented by the island 61A, a mooring pillar 62 is provided at the pier of the island 61. When the docked marine vessel 100 is anchored, the user of the client 50 couples the marine vessel 100 and the mooring pillar 62 by a mooring rope 63. Hereinafter, the pier of the island 61 where user receives a delivery may be referred to as a "destination port".

In a case of delivering to a plurality of islands 61, the server 40 decides a reasonable route for automatic navigation on the basis of the information received from the CPU 11. For example, in a case where a cargo is delivered to each of the islands 61A, 61B, and 61C, the marine vessel is navigated in a route of the island 61A→61B→61C→ the base port 60. A route in which the island 61 having no delivery schedule object is excluded from a predetermined route may be decided. Therefore, the island 61 that does not correspond to any of the destination information of the plurality of loaded cargos may be excluded from target ports of call. Note that, regardless of whether it corresponds to any of the destination information of the plurality of loaded cargos or not, all the islands 61 may be visited in the predetermined route.

FIG. 4 is a diagram illustrating an example of a flow of delivery control processing in the unmanned delivery system. A representative flow of the delivery control processing will be described with reference to FIGS. 3 and 4. Information is exchanged between the marine vessel 100 and the client 50 via the network N and the server 40. Note that the marine vessel 100 and the client 50 may directly communicate with each other if possible.

First, at the base port 60, the delivery acceptance processing 71 is executed before departure. A person who performs a series of works necessary for delivery at the base port 60 is referred to as a "sender" here. The sender may be a user at a shipper of a cargo or a staff member of a delivery company. In the delivery acceptance processing 71, the CPU 11 (the acquisition unit 30) acquires various types of information. Note that the method of acquiring various types of information is an example, and is not limited to the illustrated method.

The above various types of information can include weight and size of a cargo to be delivered, a desired delivery time zone, and the like, in addition to the destination information and the cargo specifying information of the cargo described above. The destination information, weight, size, and desired delivery time zone are input by a sender, for example. The sender attaches the tag 109 to the cargo. The CPU 11 (tag reading unit 20) reads the cargo specifying information from the tag 109 attached to the cargo. The read cargo specifying information is stored in association with the destination information and the like. Note that reading of the tag 109 may be performed after loading.

Next, the CPU 11 executes "loading guide" for guiding the sender to a recommended loading area of the cargo in the cargo room 106 on the basis of the weight of the cargo, the size of the cargo, or the weight and size of the cargo. The display unit 26 may be used for this loading guide. In the loading guide, the CPU 11 decides an arrangement position of each cargo so that a weight distribution in the marine vessel 100 is as even as possible. Note that the weight and size of the cargo may be input as values obtained using the weighing scale, the camera, or the like, instead of being input by the sender. The sender loads the cargo according to the loading guide.

When determining that the loading of the cargo to be delivered is completed, the sender inputs information indicating loading completion. The information indicating the loading completion can be input by pressing a predetermined button, for example. The CPU 11 transmits all the acquired information including the cargo specifying information and the destination information to the server 40 on condition that departure permission information for permitting departure has been generated.

In the present embodiment, conditions for generating the departure permission information are that there has been an input of the loading completion by the sender and that a total weight of all the cargos is appropriate. However, the condition that the total weight of all the cargos is appropriate may not be included in the conditions for generating the departure permission information.

Whether the total weight is appropriate or not is determined as follows. The CPU 11 determines that the total weight is appropriate when a total weight of the cargos loaded on the marine vessel 100 is within a first predetermined amount or when a total weight of the marine vessel 100 including the loaded cargos is within a second predetermined amount. In other words, it is determined that the total weight is appropriate in a case where the total weight of all loads ≤ the first predetermined amount or "the total weight of all loads + a hull weight" ≤ the second predetermined amount. In determination of establishment of these expressions, the CPU 11 may determine the establishment of the above expression on the basis of the total weight that is a total value of the individual loads input by the sender, or may determine the establishment of the above expression on the basis of a position of the waterline detected by the waterline detection unit 19 or the total weight of the cargos measured by the weighing scale 18.

When the CPU 11 transmits all the information to the server 40, the server 40 receives the information. The server 40 generates a password and associates the password with all the information. Furthermore, the server 40 decides a navigation route in a manner as described above, and returns a navigation start instruction including the decided route and password to the marine vessel 100. The password may be issued by the marine vessel 100 and transmitted to the server 40 in association with the cargo specifying information.

When the marine vessel 100 receives the navigation start instruction from the server 40, the CPU 11 (the automatic navigation unit 29) starts automatic navigation toward the destination port. Therefore, the CPU 11 causes the marine vessel 100 to depart on condition that the shipper of the cargo has generated the departure permission information.

In parallel with the transmission of the navigation start instruction, the server 40 notifies the client 50 at the destination port as a delivery target of a delivery notice. The delivery notice includes, in addition to the cargo specifying information and the password, display information for displaying at least one of a list of cargos to be unloaded at the destination port, an estimated time of arrival at the destination port, and an estimated time of departure from the destination port.

From this viewpoint, the CPU 41 of the server 40 serves as a "transmission unit" that transmits the display information to the client 50 corresponding to the destination port. Note that the CPU 11 may be configured to play a role as the transmission unit by generating and transmitting the display information. Upon receiving the display information, the client 50 causes the display unit 56 thereof to display at least one of the list of cargos to be unloaded, the estimated time of arrival at the destination port, and the estimated time of departure from the destination port. Note that the above display information may include the cargo specifying information and the information for displaying a password, and these may also be displayed on the display unit 56 of the client 50.

When the marine vessel 100 arrives at the destination port by automatic navigation, the CPU 11 as the controller executes unloading processing 72. First, the CPU 11 transmits an arrival notification indicating that the marine vessel 100 has arrived at the destination port to the client 50 corresponding to the destination port. For example, the CPU 11 transmits an arrival notification indicating that the marine vessel 100 has arrived at the port of the island 61A to the client 50A corresponding to the port 61A. The arrival notification includes the cargo specifying information.

In parallel with this, the CPU 11 starts fixed point holding for the marine vessel 100. The fixed point holding is control to keep the marine vessel 100 within a certain range.

In the fixed point holding, for example, the CPU 11 calculates a thrust and a direction of each of the marine propulsion devices 102 required for eliminating a difference between the current position and a target position of the marine vessel 100, and controls each of the marine propulsion devices 102 according to the calculation result.

Next, the CPU 11 waits for reception of "unloading preparation completion information" indicating that preparation for receiving the cargo is completed. A person who performs a series of works necessary for picking up a cargo at a destination port is referred to as a "recipient" here. The recipient is usually an owner of the client 50 corresponding to the destination information. A recipient at a destination of the arrival notification (having received the arrival notification) inputs, to the client 50, confirmation that the recipient intends to receive the cargo, whereby the unloading preparation completion information is issued. Alternatively, when a mooring sensor 64 (FIG. 3) detects that the user of the client 50 has coupled the marine vessel 100 and the mooring pillar 62 with the mooring rope 63, the unloading preparation completion information is issued. Note that the unloading preparation completion information may be issued when either one has been performed, the input of the confirmation of intention of reception or the detection of the coupling with the mooring rope 63. Alternatively, when both of them have been performed, the unloading preparation completion information may be issued.

The unloading preparation completion information is transmitted to the marine vessel 100. In response to the acquisition of the unloading preparation completion information, the CPU 11 performs "cargo unloading permission processing" that enables unloading of the cargo. The cargo unloading permission processing is to release the loading lock 28 of a door of the cargo room 106 or to release the marine vessel door lock 27 of the door 104 for entering the marine vessel 100. When only one of the locks is locked, only the locked one of the locks 27 and 28 needs to be unlocked.

After the cargo unloading permission processing is performed, the recipient unloads the cargo addressed to the recipient himself/herself. At that time, the recipient specifies the cargo to be received by inputting the cargo specifying information, the password, or the like. After specifying the cargo to be received, the recipient starts unloading work of the cargo.

Note that when the user at the destination port has a cargo desired to be delivered to another port such as another island 61 or land, the client 50 transmits, at the destination port, a request for delivery to another port to the marine vessel 100. When the marine vessel 100 receives the request for delivery to another port, the marine vessel 100 executes processing similar to the delivery acceptance processing 71 performed at the base port 60.

When the unloading work is completed, the recipient inputs, to the client 50, information indicating completion of the unloading work. As a result, the departure permission information for permitting departure from the destination port is generated. The generated departure permission information is transmitted to the server 40. When receiving the departure permission information, the server 40 decides a next navigation route and transmits the navigation start instruction including the navigation route to the marine vessel 100. Note that, in a case where new delivery acceptance processing is performed, the initially decided navigation route may be changed, and contents of the delivery notice such as the estimated time of arrival at the destination port may also be revised.

When receiving the departure permission information, the CPU 11 (the automatic navigation unit 29) causes the marine vessel 100 to depart. Note that, in a case where a predetermined period of time has elapsed after starting fixed point holding at the destination port, the CPU 11 may cause the marine vessel 100 to depart even if the departure permission information is not generated. This is to suppress a delay in arrival at a subsequent destination port even when the recipient does not perform reception at the destination port.

Therefore, the CPU 11 (the automatic navigation unit 29) normally causes the marine vessel 100 to depart on condition that the information indicating completion of the unloading work has been input to the client 50 at a destination of an arrival notification. However, even when the information indicating the completion of the unloading work is not input to the client 50, the marine vessel 100 is caused to depart in a case where the predetermined period of time has elapsed after the fixed point holding is started.

The CPU 11 automatically navigates to a next destination port, and executes the unloading processing 72 when arriving at the next destination port. After repeating the unloading processing 72 at each destination port and completing the unloading processing 72 at all the destination ports, the CPU 11 controls the marine vessel 100 to return to the base port 60.

Note that, in a case where the delivery acceptance processing has been executed on the basis of a request for delivery from the destination port to the other island 61, the unloading processing 72 corresponding thereto is executed in the other island 61. In addition, in a case where the delivery acceptance processing is executed on the basis of a request for delivery from the destination port to the land, after returning to the base port 60, work of unloading the loaded cargo and processing of delivery to the destination are performed.

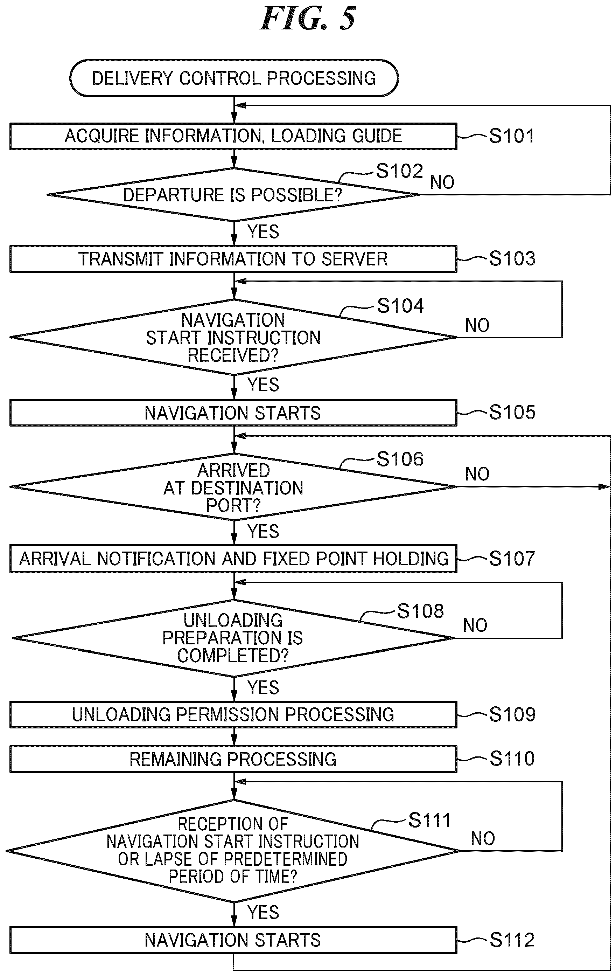

FIG. 5 is a flowchart of the delivery control processing. This processing is realized by the CPU 11 developing the program stored in the ROM 12 or the like to the RAM 13 and executing the program. This processing is started in response to reception of a delivery acceptance start instruction. This processing corresponds to the processing executed by the marine vessel 100 in the flow of control illustrated in FIG. 4. In particular, steps S101 to S103 are included in the delivery acceptance processing 71, and steps S107 to S109 are included in the unloading processing 72.

In step S101, as described with reference to FIG. 4, the CPU 11 acquires various types of information such as the cargo destination information, the cargo specifying information, the weight and size of the cargo, and the desired delivery time zone, and executes the loading guide. In step S102, the CPU 11 determines whether departure is possible or not on the basis of whether the departure permission information has been generated or not. As described above, in the present embodiment, when there has been an input of loading completion by the sender and the total weight of all the cargos is appropriate, it is determined that departure is possible. The CPU 11 repeats the processing of steps S101 and S102 until the departure becomes possible, and transmits all the acquired information to the server 40 in step S103 when the departure becomes possible.

In step S104, the CPU 11 waits until receiving the navigation start instruction from the server 40, and when receiving the navigation start instruction, in step S105, the CPU starts automatic navigation in an unmanned manner toward a destination port indicated by the destination information.

In step S106, the CPU 11 continues the automatic navigation until the marine vessel 100 arrives at the destination port, and proceeds to step S107 when the marine vessel 100 arrives at the destination port. In step S107, the CPU 11 transmits the arrival notification to the client 50 corresponding to the destination information at the arrived destination port, and starts fixed point holding of the marine vessel 100. Note that transmission timing of the arrival notification and start timing of the fixed point holding may not be the same, and neither which timing comes first nor an interval between both the timings matters.

In step S108, the CPU 11 determines whether unloading preparation is completed or not on the basis of whether the above-described unloading preparation completion information has been received or not. The CPU 11 stands by until the unloading preparation is completed, and when the unloading preparation is completed, the CPU 11 executes the cargo unloading permission processing in step S109.

In step S110, the CPU 11 executes the remaining processing. In the remaining processing, for example, the CPU 11 executes the delivery acceptance processing when the client 50 has made a request for delivery to another port.

In step S111, the CPU 11 waits until at least either one occurs, reception of the departure permission information from the server 40 or a lapse of the predetermined period of time after the fixed point holding is started. Then, when either one of these occurs, the CPU 11 proceeds to step S112, and resumes the automatic navigation of the marine vessel 100 and causes the marine vessel to depart. Thereafter, the CPU 11 returns to step S106. Note that, in the remaining processing in step S110, in a case where the marine vessel returns to the base port 60, this processing is ended, and necessary unloading processing is performed. Note that, in a case where an emergency occurs during this processing, such processing may be executed as remote control, forcible returning to the base port 60, or temporary stopping at the nearest island 61.

Note that, in the present embodiment, a part of the processing described as being executed by the CPU 11 may be executed by the server 40, or by the CPU 11 and the server 40 in cooperation. Alternatively, the CPU 11 may execute a part of the processing assumed to be executed by the server 40, or the CPU 11 and the server 40 may execute the part of the processing in cooperation.

Note that the present invention is also applicable to a jet boat in addition to various marine vessels propelled by an outboard motor, an inboard motor, or an inboard/outboard motor.

Although the present invention has been described in detail on the basis of the example embodiments thereof, the present invention is not limited to these specific embodiments, and various forms without departing from the gist of the present invention are also included in the present invention.

The present invention can also be realized by processing in which a program for realizing one or more functions of the above-described embodiments is supplied to a system or a device via a network or a non-transitory storage medium, and one or more processors of a computer of the system or the device reads and executes the program. The above program and the storage medium storing the above program constitute the present invention. The present invention can also be implemented by a circuit (e.g., ASIC) that implements one or more functions.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An unmanned delivery system in a marine vessel (100), comprising:
an acquisition unit (30) that acquires destination information of a cargo to be delivered;
an automatic navigation unit (29) that causes a marine vessel (100) to automatically navigate in an unmanned manner to a destination port indicated by the destination information; and
a controller (11) that performs arrival notification and fixed point holding of the marine vessel (100) when the marine vessel (100) arrives at the destination port.

2. The unmanned delivery system in a marine vessel (100) according to claim 1, wherein
the acquisition unit (30) acquires correspondence information that associates the cargo with the destination information, and
the controller (11) includes the correspondence information in the arrival notification.

3. The unmanned delivery system in a marine vessel (100) according to claim 1 or 2, wherein
the automatic navigation unit (29) causes the marine vessel (100) to depart on condition that a shipper of the cargo has generated departure permission information permitting departure.

4. The unmanned delivery system in a marine vessel (100) according to any of claims 1 to 3, wherein
the controller (11) guides a recommended loading area of the cargo in the marine vessel (100) on the basis of a weight and/or a size of the cargo.

5. The unmanned delivery system in a marine vessel (100) according to any of claims 1 to 4, wherein
the automatic navigation unit (29) starts departure on condition that a total weight of the cargo loaded on the marine vessel (100) is within a first predetermined amount or that a total weight of the marine vessel (100) including the cargo is within a second predetermined amount.

6. The unmanned delivery system in a marine vessel (100) according to any of claims 1 to 5, wherein
the controller transmits the arrival notification to a communication terminal device (50) corresponding to the destination port.

7. The unmanned delivery system in a marine vessel (100) according to any of claims 1 to 6, further comprising:
a transmission unit that transmits, to a communication terminal device (50) corresponding to the destination port, display information for displaying at least one of a list of cargos to be unloaded at the destination port, an estimated time of arrival at the destination port, and an estimated time of departure from the destination port.

8. The unmanned delivery system in a marine vessel (100) according to any of claims 1 to 7, wherein
the controller (11) performs cargo unloading permission processing enabling unloading of the cargo in response to acquisition of unloading preparation completion information indicating that preparation for receiving the cargo is completed.

9. The unmanned delivery system in a marine vessel (100) according to claim 8, wherein
the cargo unloading permission processing is to unlock a door of cargo room (106) or to unlock a door (104) for entering the marine vessel (100).

10. The unmanned delivery system in a marine vessel (100) according to any of claims 1 to 9, wherein
the automatic navigation unit (29) causes the marine vessel (100) to depart on condition that a recipient at a destination of the arrival notification has generated departure permission information permitting departure.

11. The unmanned delivery system in a marine vessel (100) according to claim 10, wherein
in a case where a predetermined period of time has elapsed after the fixed point holding is started at the destination port, the automatic navigation unit (2) causes the marine vessel (100) to depart even if the departure permission information is not generated.

12. A method for controlling an unmanned delivery system in a marine vessel (100), the method comprising:
acquiring (S101) destination information of a cargo to be delivered;
causing a marine vessel to automatically navigate (S105) in an unmanned manner to a destination port indicated by the destination information; and
performing arrival notification and fixed point holding (S107) of the marine vessel (100) when the marine vessel (100) arrives at the destination port.

13. A marine vessel having the unmanned delivery system in a marine vessel according to any one of claims 1 to 11.
